# FASCICULE DE BREVET EUROPEEN

(11) **EP 4 446 232 B1**
(45) Date de publication et mention de la délivrance du brevet: **11.06.2025**
(21) Numéro de dépôt: 24153732.3
(22) Date de dépôt: 24.01.2024
(51) Int. Cl.: B64D 31/06, B64C 27/04, B64D 35/08, F02C 6/20, F02C 9/44, B64C 27/12

(54) **PROCEDE DE PILOTAGE D'UN AERONEF A VOILURE TOURNANTE MULTIMOTEUR A CONSOMMATION DE CARBURANT REDUITE AU SOL**
VERFAHREN ZUR STEUERUNG EINES MEHRMOTORIGEN DREHFLÜGELFLUGZEUGS MIT REDUZIERTEM BODENVERBRAUCH
METHOD FOR CONTROLLING A MULTI-ENGINE ROTARY WING AIRCRAFT WITH REDUCED FUEL CONSUMPTION ON THE GROUND

(30) Priorité: 13.04.2023 FR 2303657
(43) Date de publication de la demande: 16.10.2024
(73) Titulaire: Airbus Helicopters, 13725 Marignane Cedex (FR)
(72) Inventeur: KRIER, Bernard, 13620 CARRY-LE-ROUET (FR); CHASSAGNE, Ivan, 76520 FRANQUEVILLE-ST-PIERRE (FR)
(74) Mandataire: GPI Brevets

(56) Documents cités:
- EP-A1- 2 735 512
- US-A1- 2018 187 604

## Description

La présente invention concerne un procédé de pilotage d'un aéronef à voilure tournante multimoteur à consommation de carburant réduite au sol, et un aéronef mettant en œuvre ce procédé.

Un aéronef à voilure tournante peut comprendre plusieurs moteurs fonctionnant avec du carburant pour mettre en mouvement une voilure tournante et des accessoires. Un giravion peut ainsi comprendre plusieurs turbomoteurs à turbine libre pour mettre en mouvement une chaîne de transmission de puissance, cette chaîne de transmission de puissance mettant notamment en rotation au moins une voilure tournante.

Un turbomoteur à turbine libre comprend un générateur de gaz muni d'un compresseur, d'une chambre de combustion et d'un ensemble de détente haute pression relié au compresseur. Le compresseur peut être muni d'un ou de plusieurs étages de compression. De même, l'ensemble de détente peut comprendre une ou plusieurs turbines de détente. En outre, le turbomoteur à turbine libre comporte au moins une turbine de travail basse pression dite « libre », à savoir indépendante en rotation du compresseur de l'ensemble de détente haute pression.

Le fonctionnement du turbomoteur est contrôlé par un système de régulation. Par exemple, un système de régulation est connu sous l'acronyme FADEC associé à l'expression anglaise « Full Authority Digital Engine Control ». Un système de régulation comprend usuellement un calculateur relié à divers capteurs et un doseur de carburant. Le doseur de carburant permet alors au système de régulation de contrôler le débit de carburant transmis au turbomoteur.

Le système de régulation comprend classiquement un sélecteur, dit « sélecteur de commande » par commodité. Par exemple, le sélecteur de commande comporte trois positions.

Lorsque le sélecteur de commande se trouve dans une première position dite par exemple « position STOP », le turbomoteur est éteint.

Lorsque le sélecteur de commande se trouve dans une deuxième position dite par exemple « position FLIGHT » le turbomoteur est en fonctionnement nominal. Le turbomoteur peut alors fonctionner en mettant en œuvre une pluralité de régimes de vol usuel.

Classiquement, les régimes de vol incluent un régime de décollage durant lequel un moteur peut développer une puissance maximale au décollage PMD durant une durée d'utilisation limitée, et un régime maximal continu durant lequel un moteur peut développer une puissance maximale en continu PMC sans limitation de durée. Les aéronefs bimoteur peuvent comprendre des régimes d'urgence utilisables en cas de panne d'un moteur, tels que : (i) un premier régime d'urgence permettant par exemple de développer une puissance de super urgence OEI30' d'environ 112% à 120% de la PMD, utilisable éventuellement pendant trente secondes consécutives au maximum, et ce trois fois pendant un vol, (ii) un deuxième régime d'urgence OEI2" permettant par exemple de développer une puissance maximale d'urgence d'environ 105% à 110% de la PMD, éventuellement pendant deux minutes consécutives, (iii) un troisième régime d'urgence OEICont permettant par exemple de développer une puissance intermédiaire d'urgence égale ou supérieure à la PMD en continu pour le reste du vol après la panne du turbomoteur.

Enfin, le sélecteur de commande comprend une position intermédiaire dite par exemple « position IDLE ». Lorsque le sélecteur de commande est positionné dans cette position IDLE, le turbomoteur fonctionne à un régime de ralenti. Lors de l'application du régime de ralenti, un moteur développe une puissance de ralenti non nulle inférieure aux puissances développées lors de l'application des régimes de vol.

Lors du démarrage d'un aéronef à voilure tournante ayant plusieurs moteurs, la procédure de démarrage impose au pilote un démarrage séquentiel des deux moteurs. Ensuite, pour réaliser les diverses opérations requises au sol, et notamment pour déplacer l'aéronef de son parking vers une aire de décollage lors d'une phase de déplacement de l'aéronef au sol, dénommée usuellement « taxiing » en langue anglaise, les sélecteurs devront être placés dans la position FLIGHT.

De même, les moteurs sont arrêtés à l'issue d'un vol lorsque l'aéronef est immobile, soit après une phase de déplacement au sol.

L'utilisation d'une installation motrice bimoteur est intéressante. Néanmoins, la consommation de carburant de l'aéronef est de fait impactée au sol par le fonctionnement de plusieurs moteurs. Or, un aéronef à voilure tournante présente des spécificités par rapport à un avion, en étant susceptible de se poser en cours de mission, sans possibilité de faire le plein de carburant. La consommation de carburant au sol est donc un paramètre à ne pas négliger.

De plus, un aéronef à voilure tournante est susceptible de se poser dans une zone où l'émission de bruit et/ou de particules fines est sensible. Or, le fonctionnement de plusieurs moteurs peut avoir un impact sur l'émission de bruit et/ou de particules fines

Dans ce contexte, le brevet FR2967132 B1 décrit un procédé d'optimisation de la consommation spécifique d'un hélicoptère ayant deux turbomoteurs. Selon ce procédé, les deux turbomoteurs fournissent des puissances sensiblement différentes. En vol stabilisé, un des turbomoteurs peut fonctionner en régime continu en développant une puissance proche de sa puissance maximale au décollage, mais inférieure ou égale à sa puissance maximale continue, pendant que l'autre turbomoteur est mis en veille à puissance nulle et chambre de combustion éteinte. En cas d'échec d'un redémarrage conventionnel, le redémarrage peut être réalisé par une assistance d'urgence au travers d'une mise à feu complémentaire de la chambre de combustion.

Le brevet FR2967133 B1 décrit un procédé d'optimisation de la consommation spécifique d'un hélicoptère ayant deux turbomoteurs. Selon ce procédé, un des turbomoteurs peut fonctionner, en vol, en régime continu pendant que l'autre turbomoteur fonctionne selon un régime de super ralenti à puissance nulle. En cas d'échec d'un redémarrage conventionnel, un redémarrage du turbomoteur au régime de super-ralenti peut être réalisé par une assistance d'urgence produite par une énergie autonome et dédiée à ce redémarrage.

Le document FR3011587 A1 décrit un procédé d'optimisation de la consommation spécifique d'un hélicoptère ayant deux turbomoteurs. Selon ce procédé, chaque turbomoteur peut fonctionner seul en régime de vol continu, l'autre turbomoteur étant alors en régime dit de super-ralenti à puissance nulle. Le régime de super-ralenti est obtenu avec la chambre de combustion du générateur de gaz allumée et une assistance par l'entraînement mécanique en rotation d'un arbre du générateur de gaz.

Le document FR3001525 A1 décrit un régime de super-ralenti à puissance réduite, mis en œuvre en alimentant en carburant des injecteurs de démarrage, et en interrompant l'alimentation d'injecteurs principaux.

Le document FR2871138 décrit un mécanisme de transmission entre au moins un accessoire et des organes moteurs d'entraînement d'un rotor d'un giravion, sélectivement, isolément ou conjointement.

Les documents EP2735512 A1 et US2018/0187604 A1 sont aussi connus.

La présente invention a alors pour objet de proposer un procédé pour un aéronef à voilure tournante multimoteur innovant, notamment pour réduire sa consommation de carburant.

L'invention vise ainsi un procédé de pilotage d'un aéronef à voilure tournante, ledit aéronef ayant une installation motrice comprenant au moins deux moteurs brûlant du combustible et une chaîne de transmission connectée à la voilure tournante, chaque moteur ayant un arbre de puissance connecté à la chaîne de transmission.

Ce procédé comporte au sol une phase à économie d'énergie applicable au sol et comprenant au moins une période économique. Cette période économique comprend une régulation à un régime actif, avec un système de régulation, d'un moteur actif parmi les au moins deux moteurs pour assurer la mise en rotation de la voilure tournante, le moteur actif développant lors du régime actif et avec son arbre de puissance une puissance motrice active non nulle. La période économique comprend, conjointement à la régulation du moteur actif au régime actif, un arrêt avec le système de régulation ou une régulation avec le système de régulation à un régime de repos de chaque moteur non actif parmi les au moins deux moteurs qui n'est pas le moteur actif, le moteur non actif au régime de repos développant avec son arbre de puissance une puissance non nulle inférieure à la puissance motrice active ou une puissance nulle avec éventuellement un générateur de gaz en mouvement.

L'expression « au sol » fait référence à un aéronef posé sur une surface, par exemple sur un sol en terre ou autres, un immeuble, un navire, une plateforme...

L'expression « moteur actif » désigne un des moteurs développant une puissance motrice lors d'une période économique, ce moteur actif pouvant par exemple développer une puissance motrice active supérieure ou égale à une puissance de ralenti.

En particulier, chaque moteur peut, par exemple, fonctionner notamment selon un régime de ralenti, permettant de développer une puissance de ralenti non nulle avec son arbre de puissance, et selon au moins un régime de vol permettant de développer une puissance de vol avec son arbre de puissance. La puissance de vol est alors supérieure à la puissance de ralenti. Dès lors, le régime actif peut être le régime de ralenti, voire le régime de vol. Utiliser un régime de vol comme régime actif permet d'optimiser la stabilité de l'aéronef alors qu'utiliser le régime de ralenti en tant que régime actif réduit la consommation de carburant de manière plus importante.

A l'inverse, l'expression « moteur non actif » désigne le ou les moteurs éteints ou mis à un régime de repos pour notamment réduire la consommation de carburant.

En particulier, un moteur est dit « à l'arrêt » ou « éteint » lorsque le moteur comporte aucun organe en mouvement.

Les moteurs d'un aéronef à voilure tournante bimoteur de l'état de l'art sont tous en fonctionnement au sol, à savoir en mettant en œuvre un régime de vol. Une phase de déplacement de l'aéronef sur le sol est ainsi réalisée en mettant en mouvement la voilure tournante à l'aide de tous les moteurs qui appliquent un régime de vol en permanence. D'autre part, une part non négligeable du temps de fonctionnement des moteurs correspond à un fonctionnement au sol.

Dans ce contexte, lorsque la phase à économie d'énergie selon l'invention est engagée, alors les moteurs fonctionnent de manière asymétrique, le ou les moteurs non actifs étant soit arrêtés soit en fonctionnement selon un régime de repos. Ainsi, seul un moteur est, par exemple, démarré au sol afin de réaliser toutes les opérations prévues, le ou les autres moteurs étant seulement rendus actif lors de la phase de décollage en tant que telle.

L'expression « phase de décollage » désigne la phase durant laquelle l'aéronef se trouve sur son aire de décollage et s'élève du sol. La phase à économie d'énergie est entreprise avant cette phase de décollage, par exemple lors du déplacement de l'aéronef au sol d'une aire de stationnement à l'aire de décollage.

Par suite, la mise au repos ou le maintien à l'arrêt d'au moins un moteur au sol peut permettre de réduire la consommation de carburant au sol et de limiter l'émission de particules fines et/ou de bruits. Une telle réduction de consommation de carburant peut permettre d'augmenter la durée de la mission ou un rayon d'action de l'aéronef, voire peut simplement permettre de réaliser des économies financières. Dans des zones à contraintes environnementales fortes, par exemple à proximité d'un hôpital, la période économique peut limiter l'émission de particules fines et/ou des nuisances sonores.

En outre, ce procédé peut être compatible avec les exigences des règlements de certification. En effet, il n'est pas impératif de garantir un démarrage rapide du ou des moteurs non actifs. Une panne empêchant de démarrer le ou les moteurs actifs n'est pas un événement catastrophique puisque l'aéronef est au sol et ne risque donc pas de s'écraser. Ce procédé ne doit donc pas nécessairement être associé à un système de redémarrage coûteux et/ou lourd.

Le procédé peut de plus comprendre une ou plusieurs des caractéristiques qui suivent, prises seules ou en combinaison.

Selon un exemple, le procédé peut comporter une activation de la phase à économie d'énergie à l'aide d'une interface homme-machine de sélection du système de régulation.

Dès lors, l'interface homme-machine de sélection peut être manœuvrée par un pilote humain pour que la phase à économie d'énergie soit engagée. Par exemple, l'interface homme-machine de sélection transmet un signal de commande à des calculateurs moteurs ou à un calculateur de gestion pilotant les calculateurs moteurs afin que les calculateurs moteurs appliquent au sol le ou les régimes requis selon le procédé de l'invention.

Le terme « signal » désigne dans l'ensemble du texte un signal analogique ou numérique, électrique ou optique par exemple.

Le moteur actif peut être choisi par un équipage, de manière cyclique, aléatoire ou encore selon une logique prédéterminée. Par exemple, un moteur particulier peut toujours faire office de moteur actif. Selon un autre exemple, le système de régulation peut appliquer une autre logique pour désigner le moteur actif, telle qu'une logique d'alternance, une logique basée sur des informations de santé moteur ou de maintenance, une logique basée sur des évènements ou des conditions extérieures au périmètre moteur comme le sens du vent, le coté d'embarquement privilégié des passagers, ...

Selon une possibilité compatible avec les précédentes, le système de régulation pouvant comprendre pour chaque moteur une interface homme-machine de démarrage propre à ce moteur configurée pour requérir au choix d'un pilote l'arrêt du moteur et une application d'un régime de ralenti et une application d'au moins un régime de vol à développer en vol, le procédé peut comporter préalablement à la phase à économie d'énergie : une régulation du moteur actif, avec le système de régulation, au régime de ralenti commandée avec l'interface homme-machine de démarrage de ce moteur actif ou une régulation des moteurs au régime de ralenti, avec le système de régulation, commandée avec les interfaces homme-machine de démarrage respectives.

Ainsi, au moins un moteur est démarré de manière usuelle en étant placé au régime de ralenti, voire ensuite à un régime de vol, avec son interface homme-machine de démarrage. Un pilote peut ensuite solliciter l'interface homme-machine de sélection précitée pour appliquer la phase à économie d'énergie, chaque moteur changeant alors éventuellement de régime de fonctionnement.

Le ou les régimes de vol peuvent être choisis dans une liste comprenant le régime de décollage, le régime maximal continu, le premier régime d'urgence OEI30', le deuxième régime d'urgence OEI2" et le troisième régime d'urgence OEICont décrits précédemment.

Eventuellement, ladite interface homme-machine de sélection peut être distincte des interfaces homme-machine de démarrage. Les interfaces homme-machine de démarrage peuvent prendre la forme d'un sélecteur à trois positions arrêt/ralenti/vol usuel.

Selon une possibilité compatible avec les précédentes, la période économique peut comprendre au moins une des étapes suivantes : commande de la voilure tournante pour faire rouler l'aéronef sur le sol, ouverture d'une porte pour embarquer ou débarquer au moins un passager ou une marchandise au sol, étape d'attente durant laquelle aucune interface de commande de l'aéronef n'est sollicitée par un équipage.

La période économique ne permet pas seulement de démarrer le moteur actif, mais peut permettre d'effectuer des opérations usuelles au sol, et notamment permettre d'entrainer en rotation la voilure tournante pour faire rouler l'aéronef sur le sol.

La phase à économie d'énergie comporte au moins deux phases de fonctionnement alterné, les phases de fonctionnement alterné comprenant une période économique et une période à fonctionnement conjoint, ladite période à fonctionnement conjoint comprenant une régulation avec le système de régulation des moteurs au régime actif

Selon une variante qui n'entre pas dans le champ d'application de la revendication 1, la phase à économie d'énergie comporte une seule phase de fonctionnement alterné. L'aéronef est piloté de manière à effectuer toutes les opérations au sol pendant la période économique. Lorsqu'un décollage est possible, un pilote ou un contrôleur commande le système de régulation pour appliquer la période à fonctionnement conjoint afin de réactiver les moteurs non actifs.

Cette solution peut, par exemple, permettre de réaliser un contrôle de bon fonctionnement de tous les moteurs lors de la période à fonctionnement conjoint de la première phase de fonctionnement alterné, puis de repasser dans une période économique lors de la deuxième phase de fonctionnement alterné suivante.

Eventuellement, le ou les moteurs non actifs peuvent développer avec leurs arbres de puissance des puissances différentes entre les deux périodes économiques des deux phases de fonctionnement alterné.

Par exemple, au démarrage de l'aéronef, ladite phase à économie d'énergie peut comporter une première phase de fonctionnement alterné et une ou plusieurs deuxièmes phases de fonctionnement alterné, le moteur non actif étant éteint par le système de régulation lors de la première phase de fonctionnement alterné et au régime de repos lors de la ou des deuxièmes phases de fonctionnement alterné.

Cette caractéristique permet d'optimiser la durée de vie des moteurs.

Selon une possibilité, chacune desdites période économique et période à fonctionnement conjoint peut être appliquée pendant une durée prédéterminée.

Selon une possibilité compatible avec les précédentes, la phase à économie d'énergie peut être une phase de pré-décollage de début de mission, ou une phase intermédiaire au sol en cours de mission ou une phase de fin de mission.

Autrement dit, chaque partie d'une mission se déroulant au sol peut faire l'objet d'une mise en place d'une phase à économie d'énergie pour optimiser la consommation de carburant et/ou l'émission de bruit et/ou l'émission de particules fines.

Selon une possibilité compatible avec les précédentes, la phase à économie d'énergie peut être une phase de pré-décollage de début de mission comportant plusieurs phases de fonctionnement alterné comprenant chacune une période économique suivie d'une période à fonctionnement conjoint.

Selon une possibilité compatible avec les précédentes, la phase à économie d'énergie peut être une phase de fin de mission comportant plusieurs phases de fonctionnement alterné comprenant chacune une période à fonctionnement conjoint suivie d'une période économique.

Selon une possibilité compatible avec les précédentes, la phase à économie d'énergie peut être une phase intermédiaire au sol en cours de mission comportant une période à fonctionnement conjoint après atterrissage suivie de plusieurs phases de fonctionnement alterné comprenant une période à fonctionnement conjoint suivie d'une période économique.

Selon une possibilité compatible avec les précédentes, le procédé peut comporter une phase de décollage comprenant une régulation avec le système de régulation de chaque moteur à un régime de vol, chaque moteur développant avec son arbre de puissance une puissance motrice supérieure à la puissance de ralenti.

Lors d'un démarrage initial de l'aéronef ou durant une phase intermédiaire d'une mission réalisée entre deux parties de la mission en vol, le procédé peut mettre en œuvre la phase à économie d'énergie pour optimiser la consommation de carburant et/ou l'émission de bruit et/ou l'émission de particules fines, puis une phase de décollage en tant que telle sollicitant conjointement tous les moteurs pour développer une puissance motrice suffisante pour le décollage.

Selon une possibilité compatible avec les précédentes, le procédé peut comporter une activation humaine de la phase de décollage avec une interface homme-machine de démarrage du système de régulation pour réguler les moteurs selon un régime de vol.

Outre un procédé, l'invention vise un aéronef à voilure tournante, ledit aéronef ayant une installation motrice comprenant au moins deux moteurs brûlant du combustible et une chaîne de transmission connectée à la voilure tournante, chaque moteur ayant un arbre de puissance connecté à la chaîne de transmission. Cet aéronef comporte un système de régulation configuré pour appliquer le procédé de pilotage selon l'invention.

L'invention et ses avantages apparaîtront avec plus de détails dans le cadre de la description qui suit avec des exemples donnés à titre illustratif en référence aux figures annexées qui représentent :
la figure 1, une vue d'un aéronef selon l'invention,
la figure 2, un schéma illustrant le procédé appliqué,
la figure 3, un schéma illustrant un exemple de procédé appliqué au démarrage de l'aéronef,
la figure 4, un schéma illustrant un exemple de procédé appliqué au démarrage de l'aéronef,
la figure 5, un schéma illustrant un exemple de procédé appliqué durant une mission de l'aéronef,
la figure 6, un schéma illustrant un exemple de procédé appliqué à la fin de la mission de l'aéronef, et
la figure 7, un schéma illustrant un exemple de procédé appliqué à la fin de la mission de l'aéronef.

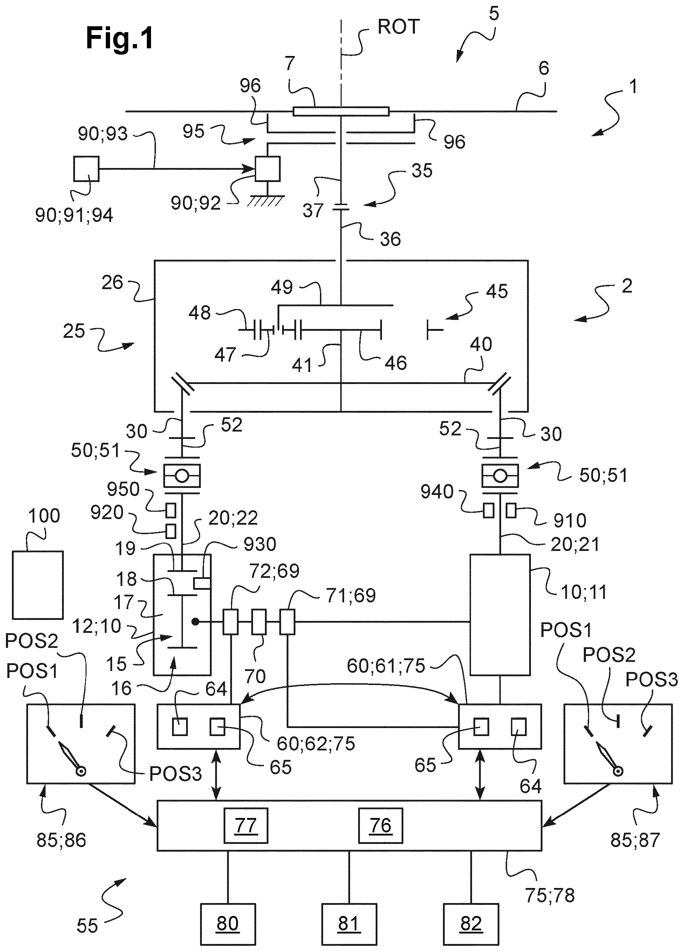

La figure 1 présente un exemple d'aéronef 1 selon l'invention. Cet aéronef 1 comporte une voilure tournante 5. La voilure tournante 5 comporte une pluralité de pales 6 mobiles en rotation autour d'un axe de rotation ROT de la voilure tournante 5, les pales 6 étant par exemple portées par un moyeu 7 ou équivalent.

Le pas des pales 6 peut être piloté par un dispositif de commande de vol 90 usuel. Par exemple, un tel dispositif de commande de vol 90 peut comprendre un levier de pas cyclique 91 et un levier de pas collectif 94 reliés par un système de liaison 93 à plusieurs servocommandes 92. Chaque servocommande 92 peut être articulée à un système de plateaux cycliques 95 relié par des bielles de pas 96 aux pales 6 respectives.

Selon un autre aspect, l'aéronef 1 peut comprendre au moins une porte 100 pour permettre l'embarquement et le débarquement de personnes et/ou de fret.

L'aéronef 1 comporte une installation motrice 2 pour mettre en rotation la voilure tournante 5 afin d'assurer la sustentation, voire l'avancement, de l'aéronef 1. Cette installation motrice 2 est pourvue d'au moins deux moteurs 10. La référence 10 désigne n'importe quel moteur, les références 11, 12 désignant des moteurs particuliers si besoin pour identifier un moteur 10 spécifique.

Selon un exemple, au moins un moteur 10 peut être un turbomoteur. Un tel turbomoteur 10 comporte un générateur de gaz 15 qui est muni d'au moins une turbine de compression 16, d'une chambre de combustion 17 dans laquelle est injecté le carburant et d'au moins une turbine de détente 18 liée en rotation à la ou aux turbines de compression 16. De plus, le turbomoteur 10 peut comporter au moins une turbine libre 19 qui met en mouvement directement ou indirectement un arbre de puissance 20 du moteur.

Indépendamment du type des moteurs, chaque moteur 10 comporte donc un arbre de puissance 20 connecté à une chaîne de transmission de puissance 25. La chaîne de transmission de puissance 25 est alors reliée de manière usuelle à la voilure tournante 5. La référence 20 désigne n'importe quel arbre de puissance, les références 21, 22 désignant des arbres de puissance particuliers respectivement des deux moteurs 11 ,12.

A titre illustratif, la chaîne de transmission de puissance 25 peut être munie d'une boîte de transmission de puissance 26 qui est mécaniquement interposée entre les moteurs 20 et la voilure tournante 5. Par exemple, la boîte de transmission de puissance 26 comporte un mât rotor 35, muni d'un ou plusieurs arbres 36, 37 colinéaires reliés à la voilure tournante 5, et selon l'exemple au moyeu 7. La boîte de transmission de puissance 26 peut être munie d'un arbre d'entrée 30 par moteur 20 et d'engrenages divers agencés entre les arbres d'entrée 30 et le mât rotor 35. Selon un exemple donné à titre illustratif, chaque arbre d'entrée 30 est en prise sur une grande roue 40. Cette grande roue 40 est alors mécaniquement reliée par un arbre interne 41 à un pignon planétaire 46 d'un étage de réduction de puissance 45. Des pignons satellites 47 sont alors en prise d'une part sur le pignon planétaire 46 et sur une couronne dentée 48 immobile dans le référentiel de l'aéronef. De plus, les pignons satellites 47 sont portés par un porte-satellites 49 solidaire en rotation du mât rotor 35. Dès lors, chaque arbre d'entrée 30 est entraîné en rotation par un arbre de sortie 20 d'un moteur 10 directement ou via une chaîne mécanique d'entrée respective.

La chaîne de transmission de puissance 25, et selon l'exemple illustré une chaîne mécanique d'entrée, peuvent comprendre au moins une roue libre 51, et/ou au moins un arbre de liaison 52, et/ou au moins un connecteur autorisant des désalignements...

La littérature décrit divers types de boîtes de transmission de puissance et diverses chaines cinématiques, l'exemple décrit étant donné uniquement à titre illustratif.

Par ailleurs, les moteurs 10 sont des moteurs thermiques fonctionnant avec du carburant. Dès lors, l'aéronef 1 comporte un système de régulation 55 pour piloter la puissance délivrée par chaque moteur 10 avec son arbre de puissance 20.

Ainsi, le système de régulation 55 comporte un doseur de carburant 69 par moteur 10. Chaque moteur 10 est alors relié via son propre doseur de carburant 69 à au moins un réservoir de carburant 70. La référence 69 désigne n'importe quel doseur de carburant, les références 71, 72 désignant des doseurs de carburant particuliers respectivement des deux moteurs 11 ,12.

Le système de régulation 55 peut comporter un calculateur moteur 60 par moteur 10. Chaque calculateur moteur 60 peut comprendre, par exemple, au moins un processeur 64 et au moins une mémoire 65, au moins un circuit intégré, au moins un système programmable, au moins un circuit logique, ces exemples ne limitant pas la portée donnée à l'expression « calculateur moteur ». Les calculateurs moteurs peuvent communiquer entre eux par des liaisons filaires ou non filaires.

Selon l'exemple décrit, l'installation motrice 2 comporte deux calculateurs moteur 61, 62 contrôlant respectivement deux moteurs 11, 12. Chaque calculateur moteur est configuré pour piloter le moteur associé et le faire fonctionner selon le régime requis, par exemple pour que le moteur piloté développe une puissance tendant vers une puissance limite de ce régime. Chaque calculateur moteur 61, 62 peut notamment contrôler le doseur de carburant 71, 72 de ce moteur 11, 12. Chaque calculateur moteur 61,62 peut être relié à de multiples senseurs de régulation pour contrôler le moteur 11,12 associé, tel que par exemple un capteur de température 930 mesurant la température de gaz par exemple à l'entrée d'une turbine libre, un capteur de vitesse mesurant par exemple la vitesse de rotation d'un générateur de gaz du turbomoteur, un couplemètre 910, 920 mesurant un couple moteur sur un organe tournant, un capteur de vitesse 940, 950 mesurant par exemple la vitesse de rotation de cet organe tournant. Un tel organe tournant peut être un arbre de puissance 20 d'un moteur 10. De plus, l'installation motrice 2 peut aussi comprendre des senseurs de régulation comprenant un couplemètre mesurant un couple exercé sur le mât rotor 35, un capteur de vitesse mesurant par exemple la vitesse de rotation de ce mât rotor 35, un capteur mesurant la pression extérieure, un capteur mesurant la température extérieure...

Les calculateurs moteurs 60 peuvent former un contrôleur 75 appliquant le procédé de l'invention, ou un calculateur de gestion 78 du système de régulation 55 peut faire office de contrôleur 75 pilotant les calculateurs moteur 60. Le calculateur de gestion 78 peut comprendre par exemple au moins un processeur 76 et au moins une mémoire 77, au moins un circuit intégré, au moins un système programmable, au moins un circuit logique, ces exemples ne limitant pas la portée donnée à l'expression « calculateur de gestion ». Le calculateur de gestion 78 peut communiquer par des liaisons filaires ou non filaires avec chaque calculateur moteur 60, voire peut être fusionné avec au moins un calculateur moteur 60. Le calculateur de gestion 78 peut communiquer avec chacun des systèmes de mesure précités.

Indépendamment de sa composition, le contrôleur 75 peut communiquer par une liaison filaire ou non filaire avec au moins un alerteur 80 pour fournir des informations à un pilote. Un tel alerteur 80 peut, par exemple, comprendre un afficheur apte à afficher un message, une diode électroluminescente qui s'allume sur commande du contrôleur 75, un haut-parleur...

En outre, le contrôleur 75 peut communiquer avec une interface homme-machine d'arrêt 82 et/ou une interface homme-machine de sélection 81.

En outre, le contrôleur 75 peut communiquer avec une interface homme-machine de démarrage 85 par moteur, à savoir deux interfaces 86, 87 selon l'exemple donné. Chaque interface homme-machine de démarrage 85 peut par exemple émettre un signal porteur d'un ordre d'arrêt, d'un ordre de mise au régime de ralenti ou d'un ordre de mise à un régime de vol du moteur concernée. La figure 1 illustre des interfaces à trois positions arrêt POS1/ ralenti POS2/vol POS 3 à cet effet.

Chaque interface homme machine 81, 82, 85 peut comprendre un organe manœuvrable par un pilote, tel qu'un bouton ou un levier par exemple, un écran tactile, une commande vocale...

Selon l'exemple illustré, les interfaces homme-machine 81, 82, 85 et l'alerteur 80 communiquent avec le calculateur de gestion 78. De manière alternative ou complémentaire, les interfaces homme-machine 81, 82, 85 et l'alerteur 80 communiquent avec un voire chaque calculateur moteur 60.

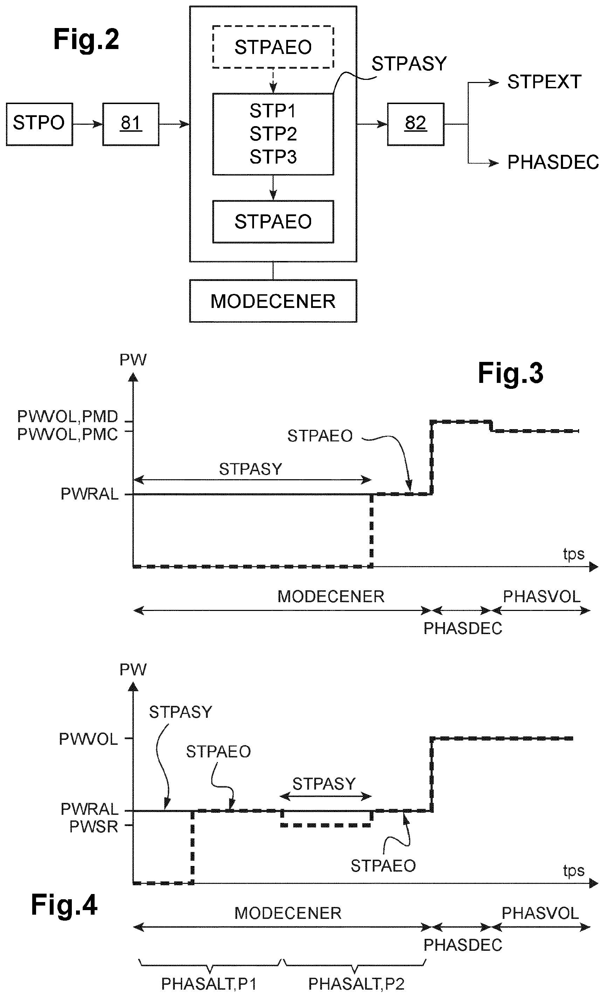

La figure 2 illustre le procédé de pilotage selon l'invention, ce procédé pouvant être mis en œuvre par un aéronef 1 à voilure tournante du type de la figure 1. Le procédé est illustré avec l'utilisation du système de régulation 55 de la figure 1. Cependant, ce procédé est applicable avec un système de régulation dépourvu d'un calculateur de gestion 78, les calculateurs moteur 60 pouvant être aisément configurés pour l'appliquer.

Ce procédé de pilotage comporte la mise en œuvre au sol, à savoir quand un train d'atterrissage de l'aéronef 1 repose sur le sol, d'une phase à économie d'énergie MODECENER.

Préalablement à la phase à économie d'énergie MODECENER, le procédé peut comporter une régulation STP0 d'un ou des moteurs 11, 12 au régime de ralenti. Par exemple, au moins une interface homme-machine de démarrage 85 est positionnée sur la position mise au ralenti, le ou les calculateurs moteurs 60 régulant le ou les moteurs 10 respectifs au régime de ralenti sur ordre du calculateur de gestion 78.

La phase à économie d'énergie MODECENER peut être déclenchée par la suite, par exemple manuellement en sollicitant l'interface homme-machine de sélection 81.

Un pilote manœuvre l'interface homme-machine de sélection 81 qui transmet un signal de commande au contrôleur 75. Le contrôleur 75 peut être configuré pour vérifier qu'une ou des conditions requises sont réunies, et le cas échéant déclenche la phase à économie d'énergie MODECENER.

Indépendamment de la méthode appliquée pour déclencher la phase à économie d'énergie MODECENER, cette phase à économie d'énergie MODECENER comporte une ou plusieurs périodes économiques STPASY. Cette période économique STPASY comprend la régulation, avec le système de régulation 55, d'un moteur 10 dit « moteur actif » à un régime actif, et conjointement l'arrêt ou la régulation à un régime de repos du ou des autres moteurs dits « moteurs non actifs ».

Le moteur 10 actif au régime actif est piloté par son calculateur moteur 60 pour développer une puissance motrice active PWACT non nulle avec son arbre de puissance 20. Cette puissance motrice active PWACT peut être suffisante à elle seule pour mettre en rotation la voilure tournante 5, et autoriser le déplacement au sol de l'aéronef 1 avec seulement le moteur 10 actif.

Selon les exemples illustrés, le régime actif peut être le régime de ralenti. Dans ce cas, cette puissance motrice active PWACT est la puissance de ralenti PWRAL inférieure à une puissance motrice en vol PWVOL utilisée lors d'au moins un régime de vol utilisable lors d'une phase de décollage, en vol et lors d'une phase d'atterrissage. Eventuellement, la puissance motrice au ralenti est inférieure à la puissance maximale continue.

Selon un autre exemple, le régime actif peut être un régime de vol. Dans ce cas, la puissance motrice active PWACT est supérieure à la puissance de ralenti PWRAL, et égale à une puissance motrice en vol PWVOL voire éventuellement à la puissance maximale continue. A l'inverse, un moteur 10 non actif au régime de repos ne génère aucune puissance motrice par l'intermédiaire de son arbre de puissance 20, avec un générateur de gaz éventuellement mis en mouvement via un démarreur externe, ou produit une puissance de super ralenti PWSR non nulle éventuellement avec la chambre de combustion allumée. La puissance de super ralenti PWSR est inférieure à la puissance motrice active PWACT, voire à la puissance de ralenti PWRAL.

Par exemple, le calculateur de gestion 78 transmet un signal de régulation à chaque calculateur moteur 60 pour faire appliquer le régime requis à chaque moteur 10. Selon un autre exemple, chaque calculateur moteur 60 reçoit le signal de commande et est configuré pour appliquer le régime requis en conséquence.

Dès lors, chaque calculateur moteur 60 pilote notamment le doseur de carburant 69 associé en fonction des signaux émis par le ou senseurs de régulation afin que le moteur 10 contrôlé développe la puissance motrice requise avec son arbre de puissance 20.

La phase à économie d'énergie MODECENER comporte aussi au moins deux phases de fonctionnement alterné, les phases de fonctionnement alterné comprenant une période à fonctionnement conjoint STPAEO et une période économique STPASY. Selon les cas décrits par la suite, la période à fonctionnement conjoint STPAEO peut être réalisée avant la période économique STPASY telle qu'illustrée en traits pointillés ou après la période économique STPASY telle qu'illustrée en traits continus.

La période à fonctionnement conjoint STPAEO comprend la régulation, avec le système de régulation 55, de tous les moteurs 10 au régime actif. Chaque moteur 10 au régime actif développe alors, avec son arbre de puissance 20, la puissance motrice active PWACT, et éventuellement la puissance au ralenti PWRAL.

Le passage de la période à fonctionnement conjoint STPAEO à la période économique STPASY, ou inversement, peut être requis par le contrôleur 75. Par exemple, le contrôleur 75 peut être configuré pour changer de période à l'issue d'une durée prédéterminée, et/ou suite à la manœuvre d'une interface et par exemple l'interface homme-machine d'arrêt 82.

Durant la période économique, au moins une des étapes suivantes peut être réalisée : commande STP1 de la voilure tournante 5 avec le dispositif de commande de vol 90 pour faire rouler l'aéronef 1 sur le sol, ouverture STP2 d'une porte 100 pour embarquer ou débarquer au moins un passager ou une marchandise au sol, étape d'attente STP3 durant laquelle aucune interface de commande de l'aéronef n'est sollicitée par un équipage.

La phase à économie d'énergie MODECENER peut être finalement interrompue, par exemple manuellement à l'aide des interfaces homme-machine de démarrage 85. Ces interfaces homme-machine de démarrage 85 peuvent transmettre des signaux d'arrêt au contrôleur 75 pour soit arrêter STPEXT tous les moteurs 10 encore en fonctionnement en les positionnant dans la position POS1 précitée, soit au contraire requérir l'application d'un régime de vol avec chaque moteur 10 afin d'initier une phase de décollage PHASDEC en les positionnant dans la position POS3 précitée.

En effet, la phase à économie d'énergie peut être une phase de pré-décollage de début de mission suivie d'une phase de décollage, ou une phase intermédiaire au sol en cours de mission précédé d'une phase d'atterrissage et suivie d'une phase de décollage, ou une phase de fin de mission suivie de l'arrêt des moteurs 10.

Les figures 3 à 7 illustrent diverses configurations au travers de diagrammes présentant une puissance motrice développée par chaque moteur 10 en ordonnées et le temps en abscisses. Ces exemples illustrent en traits continus la puissance développée par un premier moteur 11 d'un aéronef 1 bimoteur et en traits discontinus la puissance développée par un deuxième moteur 12 de l'aéronef 1. Ces exemples illustrant un régime actif de type régime de ralenti permettant au moteur actif de développer avec son arbre de travail une puissance motrice active PWACT égale à la puissance de ralenti PWRAL. Alternativement, le régime actif peut être un régime permettant au moteur actif de développer avec son arbre de travail une puissance motrice active PWACT supérieure à la puissance de ralenti PWRAL, et éventuellement égale à une puissance de vol.

La figure 3 illustre un premier exemple d'application d'un procédé qui n'entre pas dans le champ d'application de la revendication 1 au démarrage d'un aéronef 1. A l'initialisation de la phase à économie d'énergie MODECENER, le premier moteur 11 est démarré à l'aide de son interface homme-machine de démarrage 85 positionnée dans la position « ralenti » POS2. Le cas échéant, l'interface homme-machine de sélection 81 est manœuvrée. La période économique STPASY débute alors. Le premier moteur 11 fournit une puissance motrice active, égale à la puissance de ralenti PWRAL selon l'exemple, suffisante pour mettre en mouvement la voilure tournante 5. Le deuxième moteur 12 est dans l'exemple donné arrêté mais pourrait fonctionner au régime de repos, en étant préalablement démarré en positionnant son interface homme-machine de démarrage 85 dans la position « ralenti » POS2. Dans des conditions prédéterminées, par exemple suite à la manœuvre de l'interface homme-machine d'arrêt 82 ou à l'issue d'une durée prédéterminée, la période à fonctionnement conjoint STPAEO est enclenchée. Le premier moteur 11 et le deuxième moteur 12 sont pilotés pour développer la puissance motrice active PWACT, égale à la puissance de ralenti PWRAL selon l'exemple . La phase de décollage PHASDEC est ensuite enclenchée en positionnant les interfaces homme-machine de démarrage 85 dans la position vol POS3.

Durant la phase de décollage PHASDEC, le premier moteur 11 et le deuxième moteur 12 sont pilotés pour développer chacun une puissance de fonctionnement en vol PWVOL, par exemple la puissance maximale au décollage PMD. L'aéronef 1 décolle puis une phase de vol PHASVOL est initiée. Le premier moteur 11 et le deuxième moteur 12 sont pilotés pour développer une puissance de fonctionnement en vol PWVOL, par exemple la puissance maximale continue PMC.

La figure 4 illustre un exemple d'application de l'invention au démarrage d'un aéronef 1. Selon cet exemple, la phase à économie d'énergie MODECENER comporte plusieurs phases de fonctionnement alterné PHASALT, chaque phase de fonctionnement alterné PHASALT comprenant une période économique STPASY suivie d'une période à fonctionnement conjoint STPAEO. Le passage d'une phase de fonctionnement alterné à une autre peut être obtenu à l'issue d'une durée ou à l'aide de l'interface homme-machine d'arrêt 82 par exemple. Par exemple, le moteur 12 non actif est éteint, par le système de régulation 55, lors de la première phase de fonctionnement alterné P1, et au régime de repos pour développer une puissance PWSR non nulle lors de la ou des deuxièmes phases de fonctionnement alterné P2.

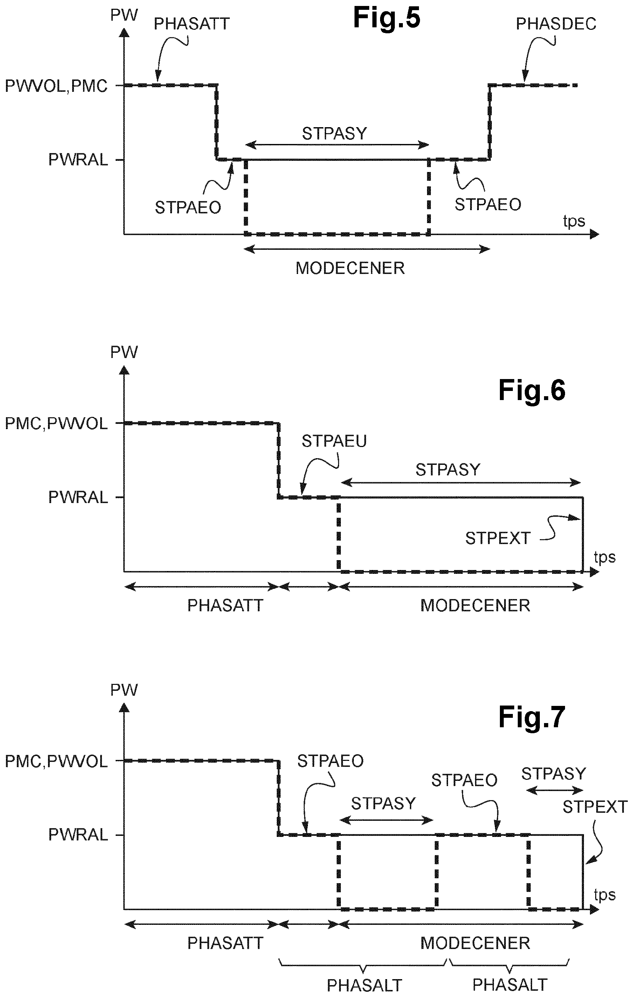

La figure 5 illustre un exemple qui n'entre pas dans le champ d'application de la revendication 1 en cours de mission. Durant une phase d'atterrissage, chaque moteur 10 fonctionne selon un régime de vol, par exemple en développant la puissance maximale continue PMC. Une fois l'aéronef 1 posé au sol, les interfaces homme-machine de démarrage 85 sont positionnées dans la position « ralenti ». Une période à fonctionnement conjoint STPAEO est ainsi mise en œuvre. La phase à économie d'énergie MODECENER est ensuite enclenchée, par exemple en manœuvrant l'interface homme-machine de sélection 81. Le premier moteur 11 est piloté par son calculateur moteur 61 pour devenir le moteur 10 actif sollicité durant la période économique STPASY. Le premier moteur 11 fournit la puissance motrice active PWACT, égale à la puissance de ralenti PWRAL selon l'exemple. Le deuxième moteur 12 est dans l'exemple donné arrêté mais pourrait fonctionner au régime de repos en étant régulé par son calculateur moteur 62. Dans des conditions prédéterminées, la période à fonctionnement conjoint STPAEO est enclenchée, par exemple en manœuvrant l'interface homme-machine d'arrêt 82. Le premier moteur 11 et le deuxième moteur 12 sont pilotés par les calculateurs moteur 61,62 pour développer la puissance motrice active PWACT, égale à la puissance de ralenti PWRAL selon l'exemple. Sur ordre des interfaces homme-machine de démarrage 85 positionnées dans les positions vol par exemple, la phase de décollage PHASDEC est ensuite enclenchée. Le premier moteur 11 et le deuxième moteur 12 sont pilotés pour développer une puissance de fonctionnement en vol PWVOL, par exemple la puissance maximale au décollage PMD.

La figure 6 illustre un premier exemple d'application qui n'entre pas dans le champ d'application de la revendication 1 en fin de mission. Durant une phase d'atterrissage, chaque moteur 10 fonctionne selon un régime de vol, par exemple en développant la puissance maximale continue PMC. Une fois l'aéronef 1 posé au sol, les interfaces homme-machine de démarrage 85 sont positionnées dans la position « ralenti ». La phase à économie d'énergie MODECENER est ensuite enclenchée, par exemple en manœuvrant l'interface homme-machine de sélection 81. Le premier moteur 11 est piloté pour devenir le moteur 10 actif sollicité durant la période économique STPASY. Le premier moteur 11 fournit la puissance motrice active PWACT, égale à la puissance de ralenti PWRAL selon l'exemple. Le deuxième moteur 12 est dans l'exemple donné arrêté mais pourrait fonctionner au régime de repos. Dans des conditions prédéterminées, l'arrêt de tous les moteurs 10 est enclenché, par exemple en manœuvrant les interfaces homme-machine de démarrage 85 pour les positionner dans la position arrêt POS1.

La figure 7 illustre un exemple d'application de l'invention en fin de mission. Selon cet exemple, la phase à économie d'énergie MODECENER comporte plusieurs phases de fonctionnement alterné PHASALT, chaque phase de fonctionnement alterné PHASALT comprenant une période à fonctionnement conjoint STPAEO suivie d'une période économique STPASY.

Naturellement, la présente invention est sujette à de nombreuses variations quant à sa mise en œuvre. Bien que plusieurs modes de réalisation aient été décrits, il est envisageable de remplacer un moyen décrit par un moyen équivalent sans sortir du cadre de la présente invention et des revendications.

## Revendications

1. Procédé de pilotage d'un aéronef (1) à voilure tournante (5), ledit aéronef (1) ayant une installation motrice (2) comprenant au moins deux moteurs (10) brûlant du combustible et une chaîne de transmission (25) connectée à la voilure tournante (5), chaque moteur (10) ayant un arbre de puissance (20) connecté à la chaîne de transmission (25), le procédé comportant une phase à économie d'énergie (MODECENER) applicable au sol et comprenant au moins une période économique (STPASY), cette période économique (STPASY) comprenant une régulation à un régime actif, avec un système de régulation (55), d'un moteur actif parmi les au moins deux moteurs (10) pour assurer la mise en rotation de la voilure tournante (5), le moteur actif développant lors du régime actif et avec son arbre de puissance (20) une puissance motrice active non nulle, la période économique (STPASY) comprenant, conjointement à la régulation du moteur actif au régime actif, un arrêt avec le système de régulation (55) ou une régulation avec le système de régulation (55) à un régime de repos de chaque moteur non actif parmi les au moins deux moteurs (10) qui n'est pas le moteur actif, le moteur non actif au régime de repos développant avec son arbre de puissance (20) une puissance non nulle inférieure à la puissance motrice active ou une puissance nulle,
**caractérisé en ce que** durant lequel ladite phase à économie d'énergie (MODECENER) comporte au moins deux phases de fonctionnement alterné (PHASALT), chaque phase de fonctionnement alterné (PHASALT) comprenant une période économique (STPASY) et une période à fonctionnement conjoint (STPAEO), ladite période à fonctionnement conjoint (STPAEO) comprenant une régulation avec le système de régulation (55) des moteurs (10) au régime actif.

2. Procédé selon la revendication 1,
**caractérisé en ce que** le procédé comporte une activation de la phase à économie d'énergie à l'aide d'une interface homme-machine de sélection (81) du système de régulation (55).

3. Procédé selon l'une quelconque des revendications 1 à 2,
**caractérisé en ce que** le système de régulation (55) comprenant pour chaque moteur une interface homme-machine de démarrage (85) propre à ce moteur configurée pour requérir au choix d'un pilote l'arrêt du moteur et une application d'un régime de ralenti et une application d'au moins un régime de vol à développer en vol, le procédé comporte préalablement à la phase à économie d'énergie (MODECENER) : une régulation du moteur actif, avec le système de régulation (55), au régime de ralenti commandée avec l'interface homme-machine de démarrage (85) de ce moteur actif ou une régulation des moteurs au régime de ralenti, avec le système de régulation (55), commandée avec les interfaces homme-machine de démarrage (85) respectives.

4. Procédé selon les revendications 2 et 3,
**caractérisé en ce que** ladite interface homme-machine de sélection (81) est distincte des interfaces homme-machine de démarrage (85).

5. Procédé selon l'une quelconque des revendications 1 à 4,
**caractérisé en ce que** chaque moteur pouvant fonctionner selon un régime de ralenti permettant de développer une puissance de ralenti non nulle avec son arbre de puissance et selon au moins un régime de vol permettant de développer une puissance de vol avec son arbre de puissance supérieure à la puissance de ralenti, le régime actif est le régime de ralenti.

6. Procédé selon l'une quelconque des revendications 1 à 5,
**caractérisé en ce que** ladite période économique comprend au moins une des étapes suivantes : commande (STP1) de la voilure tournante (5) pour faire rouler l'aéronef (1) sur le sol, ouverture (STP2) d'une porte (100) pour embarquer ou débarquer au moins un passager ou une marchandise au sol, étape d'attente (STP3) durant laquelle aucune interface de commande de l'aéronef n'est sollicitée par un équipage.

7. Procédé selon l'une quelconque des revendications 1 à 6,
**caractérisé en ce que** chacune desdites période économique (STPASY) et période à fonctionnement conjoint (STPAEO) est appliquée pendant une durée prédéterminée.

8. Procédé selon l'une quelconque des revendications 1 à 7,
**caractérisé en ce que** le moteur non actif développe avec son arbre de puissance (20) des puissances différentes entre les deux périodes économiques des deux phases de fonctionnement alterné (PHASALT).

9. Procédé selon la revendication 8,
**caractérisé en ce qu'**au démarrage de l'aéronef (1), ladite phase à économie d'énergie (MODECENER) comporte une première phase de fonctionnement alterné (P1) et une ou plusieurs deuxièmes phases de fonctionnement alterné (P2), le moteur non actif étant éteint par le système de régulation (55) lors de la première phase de fonctionnement alterné (P1) et au régime de repos lors de la ou les deuxièmes phases de fonctionnement alterné (P2).

10. Procédé selon l'une quelconque des revendications 1 à 9
**caractérisé en ce que** la phase à économie d'énergie (MODECENER) est une phase de pré-décollage de début de mission, ou une phase intermédiaire au sol en cours de mission ou une phase de fin de mission.

11. Procédé selon l'une quelconque des revendications 1 à 9,
**caractérisé en ce que** la phase à économie d'énergie (MODECENER) est une phase de pré-décollage de début de mission comportant plusieurs phases de fonctionnement alterné (PHASALT) comprenant chacune une période économique (STPASY) suivie d'une période à fonctionnement conjoint (STPAEO).

12. Procédé selon l'une quelconque des revendications 1 à 9,
**caractérisé en ce que** la phase à économie d'énergie (MODECENER) est une phase de fin de mission comportant plusieurs phases de fonctionnement alterné (PHASALT) comprenant chacune une période à fonctionnement conjoint (STPAEO) suivie d'une période économique (STPASY).

13. Procédé selon l'une quelconque des revendications 1 à 9,
**caractérisé en ce que** la phase à économie d'énergie (MODECENER) est une phase intermédiaire au sol en cours de mission comportant une période à fonctionnement conjoint (STPAEO) après atterrissage suivie de au moins deux phases de fonctionnement alterné comprenant une période à fonctionnement conjoint (STPAEO) suivie d'une période économique (STPASY).

14. Procédé selon l'une quelconque des revendications 1 à 13,
**caractérisé en ce que** le procédé comporte une phase de décollage comprenant une régulation avec le système de régulation (55) de chaque moteur (10) à un régime de vol, chaque moteur (10) développant avec son arbre de puissance (20) une puissance motrice supérieure à une puissance de ralenti.

15. Procédé la revendication 14,
**caractérisé en ce que** le procédé comporte une activation humaine de la phase de décollage avec une interface homme-machine de démarrage (85) du système de régulation (55) pour réguler les moteurs selon un régime de vol.

16. Aéronef (1) à voilure tournante (5), ledit aéronef (1) ayant une installation motrice (2) comprenant au moins deux moteurs (10) brûlant du combustible et une chaîne de transmission (25) connectée à la voilure tournante (5), chaque moteur ayant un arbre de puissance (20) connecté à la chaîne de transmission (25),
**caractérisé en ce que** ledit aéronef (1) comporte un système de régulation (55) configuré pour appliquer le procédé selon l'une quelconque des revendications 1 à 15.

## Patentansprüche

1. Verfahren zum Steuern eines Luftfahrzeugs (1) mit Drehflügel (5), wobei das Luftfahrzeug (1) eine Triebwerksanlage (2) mit mindestens zwei Kraftstoff verbrennenden Triebwerken (10) und einen mit dem Drehflügel (5) verbundenen Antriebsstrang (25) aufweist, wobei jedes Triebwerk (10) eine mit dem Antriebsstrang (25) verbundene Antriebswelle (20) aufweist, wobei das Verfahren eine am Boden anwendbare Energiesparphase (MODECENER) umfasst, die mindestens eine Sparperiode (STPASY) umfasst, wobei diese Sparperiode (STPASY) eine Regelung eines aktiven Triebwerks unter den mindestens zwei Triebwerken (10) auf eine Aktivdrehzahl durch ein Regelsystem (55) umfasst, um die Drehung der Drehflügel (5) sicherzustellen, wobei das aktive Triebwerk während des Aktivdrehzahlbetriebs mit seiner Antriebswelle (20) eine nichtverschwindende Aktivantriebsleistung erbringt, wobei die Sparperiode (STPASY) zusammen mit dem Regeln des aktiven Triebwerks auf Aktivdrehzahl ein Anhalten, durch das Regelsystem (55), oder ein Regeln jedes nicht aktiven Triebwerks der mindestens zwei Triebwerke (10), das nicht das aktive Triebwerk ist, auf eine Ruhedrehzahl durch das Regelsystem (55) umfasst, wobei das nicht aktive Triebwerk bei der Ruhedrehzahl mit seiner Antriebswelle (20) eine nichtverschwindende Leistung, die kleiner ist als die Aktivantriebsleistung, oder eine verschwindende Leistung erzeugt,
**dadurch gekennzeichnet, dass**
die Energiesparphase (MODECENER) mindestens zwei alternierende Betriebsphasen (PHASALT) umfasst, wobei jede alternierende Betriebsphase (PHASALT) eine Sparperiode (STPASY) und eine gemeinsame Betriebsperiode (STPAEO) umfasst, wobei die gemeinsame Betriebsperiode (STPAEO) ein Regeln der Triebwerke (10) auf Aktivdrehzahl mit dem Regelsystem (55) umfasst.

2. Verfahren nach Anspruch 1,
**dadurch gekennzeichnet, dass** das Verfahren ein Aktivieren der Energiesparphase mittels einer Auswahl-Mensch-Maschine-Schnittstelle (81) des Regelsystems (55) umfasst.

3. Verfahren nach einem der Ansprüche 1 bis 2,
**dadurch gekennzeichnet, dass** das Regelsystem (55) für jedes Triebwerk eine diesem Triebwerk eigene Start-Mensch-Maschine-Schnittstelle (85) umfasst, die konfiguriert ist, um nach Wahl eines Piloten das Abstellen des Triebwerks und das Anwenden einer Leerlaufdrehzahl sowie das Anwenden mindestens einer im Flug zu entwickelnden Flugdrehzahl anzufordern, wobei das Verfahren vor der Energiesparphase (MODECENER) eine mit der Start-Mensch-Maschine-Schnittstelle (85) dieses aktiven Triebwerks gesteuerte Regelung des aktiven Triebwerks mit dem Regelsystem (55) auf Leerlaufdrehzahl oder eine mit den jeweiligen Start-Mensch-Maschine-Schnittstellen (85) gesteuerte Regelung der Triebwerke mit dem Regelsystem (55) auf Leerlaufdrehzahl umfasst.

4. Verfahren nach den Ansprüchen 2 und 3,
**dadurch gekennzeichnet, dass** die Auswahl-Mensch-Maschine-Schnittstelle (81) von den Start-Mensch-Maschine-Schnittstellen (85) verschieden ist.

5. Verfahren nach einem der Ansprüche 1 bis 4,
**dadurch gekennzeichnet, dass** jedes Triebwerk mit einer Leerlaufdrehzahl, mit der es über seine Antriebswelle eine nichtverschwindende Leerlaufleistung entwickeln kann, und mit mindestens einer Flugdrehzahl betreibbar ist, mit der es über seine Antriebswelle eine Flugleistung entwickeln kann, die größer ist als die Leerlaufleistung, wobei die Aktivdrehzahl die Leerlaufdrehzahl ist.

6. Verfahren nach einem der Ansprüche 1 bis 5,
**dadurch gekennzeichnet, dass** die Sparperiode mindestens einen der folgenden Schritte umfasst: Steuern (STP1) der Drehflügel (5), um das Luftfahrzeug (1) auf dem Boden rollen zu lassen, Öffnen (STP2) einer Tür (100), um mindestens einen Passagier oder Frachtgut vom Boden einzuladen oder auszuladen, Warteschritt (STP3), in dem keine Steuerschnittstelle des Luftfahrzeugs von einer Besatzung betätigt wird.

7. Verfahren nach einem der Ansprüche 1 bis 6,
**dadurch gekennzeichnet, dass** sowohl die Sparperiode (STPASY) als auch die gemeinsame Betriebsperiode (STPAEO) für eine vorbestimmte Dauer angewendet wird.

8. Verfahren nach einem der Ansprüche 1 bis 7,
**dadurch gekennzeichnet, dass** das nicht aktive Triebwerk mit seiner Antriebswelle (20) in den beiden Sparperioden der beiden alternierenden Betriebsphasen (PHASALT) unterschiedliche Leistungen entwickelt.

9. Verfahren nach Anspruch 8,
**dadurch gekennzeichnet, dass** beim Start des Luftfahrzeugs (1) die Energiesparphase (MODECENER) eine erste alternierende Betriebsphase (P1) und eine oder mehrere zweite alternierende Betriebsphasen (P2) umfasst, wobei das nicht aktive Triebwerk während der ersten alternierenden Betriebsphase (P1) durch das Regelsystem (55) abgeschaltet wird und während der zweiten alternierenden Betriebsphase(n) (P2) auf Ruhedrehzahl ist.

10. Verfahren nach einem der Ansprüche 1 bis 9,
**dadurch gekennzeichnet, dass** die Energiesparphase (MODECENER) eine Startvorbereitungsphase zu Beginn des Einsatzes oder eine Zwischenphase am Boden während des Einsatzes oder eine Endphase des Einsatzes ist.

11. Verfahren nach einem der Ansprüche 1 bis 9,
**dadurch gekennzeichnet, dass** die Energiesparphase (MODECENER) eine Startvorbereitungsphase zu Beginn des Einsatzes ist, die mehrere alternierende Betriebsphasen (PHASALT) umfasst, von denen jede eine Sparperiode (STPASY), gefolgt von einer gemeinsamen Betriebsperiode (STPAEO), umfasst.

12. Verfahren nach einem der Ansprüche 1 bis 9,
**dadurch gekennzeichnet, dass** die Energiesparphase (MODECENER) eine Endphase der Mission ist, die mehrere alternierende Betriebsphasen (PHASALT) umfasst, von denen jede eine gemeinsame Betriebsperiode (STPAEO), gefolgt von einer Sparperiode (STPASY), umfasst.

13. Verfahren nach einem der Ansprüche 1 bis 9,
**dadurch gekennzeichnet, dass** die Energiesparphase (MODECENER) eine Zwischenphase am Boden während des Einsatzes ist, die eine gemeinsame Betriebsperiode (STPAEO) nach der Landung umfasst, gefolgt von mindestens zwei alternierenden Betriebsphasen, die eine gemeinsame Betriebsperiode (STPAEO) , gefolgt von einer Sparperiode (STPASY), umfassen.

14. Verfahren nach einem der Ansprüche 1 bis 13,
**dadurch gekennzeichnet, dass** das Verfahren eine Startphase umfasst, die eine Regelung jedes Triebwerks (10) auf eine Flugdrehzahl mit dem Regelsystem (55) umfasst, wobei jedes Triebwerk (10) mit seiner Antriebswelle (20) eine Antriebsleistung entwickelt, die größer ist als eine Leerlaufleistung.

15. Verfahren nach Anspruch 14,
**dadurch gekennzeichnet, dass** das Verfahren eine manuelle Aktivierung der Startphase mit einer Start-Mensch-Maschine-Schnittstelle (85) des Regelsystems (55) umfasst, um die Triebwerke auf eine Flugdrehzahl zu regeln.

16. Luftfahrzeug (1) mit Drehflügel (5), wobei das Luftfahrzeug (1) eine Triebwerksanlage (2) mit mindestens zwei Kraftstoff verbrennenden Triebwerken (10) und einem mit dem Drehflügel (5) verbundenen Antriebsstrang (25) aufweist, wobei jedes Triebwerk eine mit dem Antriebsstrang (25) verbundene Antriebswelle (20) aufweist,
**dadurch gekennzeichnet, dass** das Luftfahrzeug (1) ein Regelsystem (55) aufweist, das zur Durchführung des Verfahrens nach einem der Ansprüche 1 bis 15 konfiguriert ist.

## Claims

1. Method for controlling an aircraft (1) with a rotary wing (5), said aircraft (1) having a power plant (2) comprising at least two engines (10) burning fuel and a transmission chain (25) connected to the rotary wing (5), each engine (10) having a power shaft (20) connected to the transmission chain (25), the method comprising an energy-saving phase (MODECENER) applicable on the ground and comprising at least one energy-saving period (STPASY), this energy-saving period (STPASY) comprising controlling, at an active rating, with a control system (55), one active engine from the at least two engines (10), in order to ensure rotation of the rotary wing (5), the active engine producing, at the active rating and with its power shaft (20), a non-zero active driving power, the energy-saving period (STPASY) comprising, together with the control of the active engine at the active rating, use of the control system (55) to stop or use of the control system (55) to control, at an inactive rating, each inactive engine from the at least two engines (10) that is not the active engine, the inactive engine at the inactive rating producing, with its power shaft (20), a non-zero power that is less than the active driving power or zero power,
**characterized in that** during which said energy-saving phase (MODECENER) comprises at least two alternating operating phases (PHASALT), each alternating operating phase (PHASALT) comprising an energy-saving period (STPASY) and a joint operation period (STPAEO), said joint operation period (STPAEO) comprising controlling the engines (10) at the active rating with the control system (55).

2. Method according to Claim 1,
**characterized in that** the method comprises activating the energy-saving phase by means of a human-machine selection interface (81) of the control system (55).

3. Method according to any one of Claims 1 to 2,
**characterized in that** control system (55) comprising, for each engine, a human-machine starting interface (85) specific to this engine configured to prompt, at the choice of a pilot, the stopping of the engine and the application of an idle rating and the application of at least one flight rating to be reached during flight, the method comprises, prior to the energy-saving phase (MODECENER): controlling the active engine, with the control system (55), at the idle rating set with the human-machine starting interface (85) of this active engine or controlling the engines, with the control system (55), at the idle rating set with the respective human-machine starting interfaces (85).

4. Method according to Claims 2 and 3,
**characterized in that** said human-machine selection interface (81) is separate from the human-machine starting interface (85).

5. Method according to any one of Claims 1 to 4,
**characterized in that** each engine being able to operate at an idle rating, enabling a non-zero idle power to be produced with its power shaft and at least one flight rating enabling a flight power greater than the idle power to be produced with its power shaft, the active rating is the idle rating.

6. Method according to any one of Claims 1 to 5,
**characterized in that** said energy-saving period comprises at least one of the following steps: controlling (STP1) the rotary wing (5) in order to taxi the aircraft (1) on the ground, opening (STP2) a door (100) to embark or disembark at least one passenger or goods on the ground, a waiting step (STP3) during which no control interface of the aircraft is operated by a crew.

7. Method according to any one of Claims 1 to 6,
**characterized in that** each of said energy-saving period (STPASY) and said joint operation period (STPAEO) is applied for a predetermined time period.

8. Method according to any one of Claims 1 to 7,
**characterized in that** the inactive engine produces different powers with its power shaft (20) in the two energy-saving periods of the two alternating operating phases (PHASALT).

9. Method according to Claim 8,
**characterized in that** when the aircraft (1) is started up, said energy-saving phase (MODECENER) comprises a first alternating operating phase (P1) and one or more second alternating operating phases (P2), the inactive engine being switched off by the control system (55) during the first alternating operating phase (P1) and switched to the inactive rating during the second alternating operating phase or phases (P2).

10. Method according to any one of Claims 1 to 9
**characterized in that** the energy-saving phase (MODECENER) is a pre-take-off phase at the start of a mission, or an intermediate phase on the ground during a mission or an end-of-mission phase.

11. Method according to any one of Claims 1 to 9,
**characterized in that** the energy-saving phase (MODECENER) is a pre-take-off phase at the start of a mission comprising multiple alternating operating phases (PHASALT) each comprising an energy-saving period (STPASY) followed by a joint operation period (STPAEO).

12. Method according to any one of Claims 1 to 9,
**characterized in that** energy-saving phase (MODECENER) is an end-of-mission phase comprising multiple alternating operating phases (PHASALT) each comprising a joint operation period (STPAEO) followed by an energy-saving period (STPASY).

13. Method according to any one of Claims 1 to 9,
**characterized in that** the energy-saving phase (MODECENER) is an intermediate phase on the ground during a mission comprising a joint operation period (STPAEO) after landing followed by at least two alternating operating phases comprising a joint operation period (STPAEO) followed by an energy-saving period (STPASY).

14. Method according to any one of Claims 1 to 13,
**characterized in that** l the method comprises a take-off phase comprising controlling each engine (10) at a flight rating with the control system (55), each engine (10) producing, with its power shaft (20), a driving power greater than an idle power.

15. Method la according to Claim 14,
**characterized in that** the method comprises activation by a human of the take-off phase with a human-machine starting interface (85) of the control system (55), in order to control the engines according to a flight rating.

16. Aircraft (1) with a rotary wing (5), said aircraft (1) having a power plant (2) comprising at least two engines (10) burning fuel and a transmission chain (25) connected to the rotary wing (5), each engine having a power shaft (20) connected to the transmission chain (25),
**characterized in that** said aircraft (1) comprises a control system (55) configured to apply the method according to any one of Claims 1 to 15.
